Europäisches Patentamt

European Patent Office

Office européen des brevets

(19)

(11) Veröffentlichungsnummer: **0 001 657**
**B1**

# EUROPÄISCHE PATENTSCHRIFT

(12)

(45) Veröffentlichungstag der Patentschrift:
30.12.81

(21) Anmeldenummer: 78200232.3

(22) Anmeldetag: 09.10.78

(51) Int. Cl.³: **C 03 C 17/32, B 65 D 23/08**

(54) **Verfahren zum Beschichten von Glasoberflächen.**

(30) Priorität: 13.10.77 DE 2746006

(43) Veröffentlichungstag der Anmeldung:
02.05.79 Patentblatt 79/9

(45) Bekanntmachung des Hinweises auf die Patenterteilung:
30.12.81 Patentblatt 81/52

(84) Benannte Vertragsstaaten:
**BE CH DE FR GB LU NL**

(56) Entgegenhaltungen:
**DE-A-2 364 157**
**FR-A-1 426 058**
**US-A-4 035 548**

(73) Patentinhaber: CHEMISCHE WERKE HÜLS AG,
**Postfach 1320, D-4370 Marl 1 (DE)**

(72) Erfinder: **Gras, Rainer, Dr., An der Ziegelei 91,
D-4690 Herne 2 (DE)**

(74) Vertreter: Steil, Hanna, Dipl.-Chem., RSP
**PATENTE-PB 40 Holsterhauser
Strasse 160 Postfach 2840, D-4690 Herne 2 (DE)**

ACTORUM AG.

Verfahren zum Beschichten von Glasoberflächen

Es ist bereits lange bekannt, Glasflaschen, z. B. Glasflakons, die man beschichten will, vor der eigentlichen Beschichtung mit einer Lösung von Silanen zu behandeln, da diese als Haftvermittler zwischen Glasfläche und Beschichtung dienen. Verwiesen wird hierzu auf FR-A-1 426 058, wobei dort zur Beschichtung eine Mischung aus nichtveresterten Epoxyharzen und polymerem Methylacrylat eingesetzt wird.

Des weiteren ist es gemäss DE-A-2 364 157 bekannt, Glasflaschen mittels Polyurethanen in einem Einkomponentenverfahren zu beschichten, wobei die Isocyanatkomponente in blockierter Form eingesetzt wird. Als Hydroxyl- bzw. Amin-Komponente werden lediglich Guanamine oder Bisphenol-A, – beide bisfunktionell – oder Melamin verwendet.

Melamin ist zwar trifunktionell, sein Zusatz führt aber wegen Sublimation zu Umweltverschmutzungen sowie zur Eintrübung.

Schliesslich ist gemäss US-A-4 035 548 auch eine PUR-Beschichtung zwischen zwei Glasflächen bekannt, die allerdings naturgemäss keine Waschbeständigkeit aufweisen muss, d. h. die Beanspruchung ist gering. Es werden nur lineare bifunktionelle Verbindungen als Hydroxylkomponente eingesetzt.

Das Überziehen von Glasoberflächen, insbesondere Glasflaschen, mit einer festhaftenden, einheitlichen und transparenten Kunststoffschicht verleiht diesen Flaschen beim Einsatz für kohlensäurehaltige Getränke, wie Bier, Cola, Mineralwasser, Fruchtsaftgetränke usw., eine ausserordentliche Sicherheit und verlängert bei der Mehrwegflasche die Gebrauchsdauer. Infolge Schlag- und Stosseinwirkung, aber auch durch Erhitzen im Sonnenlicht oder anderen Wärmequellen, ist es nämlich in der Vergangenheit häufig zu Explosionen ungeschützter Flaschen gekommen, die verschiedentlich schwere körperliche Verletzungen, insbesondere Augenverletzungen, bei Menschen hervorgerufen haben.

Einige der bisher bekannten Beschichtungen für diesen Zweck besitzen den Nachteil, dass sich die Überzugsschicht bei wiederholter Reinigung eintrübt, was bei thermoplastischen Materialien möglicherweise auf einen Nachkristallisationseffekt des Kunststoffs zurückzuführen ist. Derartige Flaschen vermitteln optisch einen negativen Eindruck und sind daher verkaufspsychologisch unerwünscht. Der Nachteil von duroplastischen, äthergruppenenthaltenden Kunststoffüberzügen liegt in der oxidativen Anfälligkeit begründet, was zum Verspröden der Schutzschicht führt und somit, insbesondere bei Mehrwegflaschen, nach einiger Zeit den Splitterschutz nicht mehr gewährleistet.

Es wurde nun gefunden, dass man Glasoberflächen auch ohne die eingangs angeführten Nachteile beschichten kann, wenn man das Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 µm durch Auftragen von Massen aus Polyisocyanaten und hydroxylgruppenhaltigen Verbindungen sowie üblicher Verarbeitungszusätze und Aushärten des Überzuges bei erhöhten Temperaturen, so ausführt, dass man zunächst die reine Glasoberfläche mit einer wässrigen oder alkoholischen Silanschlichte behandelt, trocknet und anschliessend die so behandelte Oberfläche mit einer Masse aus

a) aliphatischen und/oder cycloaliphatischen Diisocyanaten oder deren Umsetzungsprodukte mit Wasser im Molverhältnis von 2:≦1 und einem Gemisch hydroxylgruppenhaltiger Verbindungen bestehend aus

40–80 Gew.-%, vorzugsweise 50–75 Gew.-%, trifunktioneller, hydroxylgruppenhaltiger Polyester aus Triolen und $\omega$-Hydroxycarbonsäuren oder deren Lactonen mit mindestens 4 C-Atomen mit einem mittleren Molekulargewicht von 300–1400,

15–50 Gew.-%, vorzugsweise 20–40 Gew.-%, bifunktioneller, hydroxylgruppenhaltiger Polyester aus Diolen und $\omega$-Hydroxycarbonsäuren oder deren Lactonen mit mindestens 4 C-Atomen mit einem mittleren Molekulargewicht von 400–2000 und

2,5–20 Gew.-%, vorzugsweise 5–15 Gew.-%, aliphatischer und/oder cycloaliphatischer Diole

oder aus

b) ein Präpolymer aus aliphatischen und/oder cycloaliphatischen Diisocyanaten und 2,5–20 Gew.-%, vorzugsweise 5–15 Gew.-%, niedermolekularen aliphatischen Diolen und einem Gemisch hydroxylgruppenhaltiger Polyester bestehend aus

40–80 Gew.-%, vorzugsweise 50–75 Gew.-%, trifunktioneller, hydroxylgruppenhaltiger Polyester aus Triolen und $\omega$-Hydroxycarbonsäuren oder deren Lactonen mit mindestens 4 C-Atomen mit einem mittleren Molekulargewicht von 300–1400 und

15–50 Gew.-%, vorzugsweise 20–40 Gew.-%, bifunktioneller, hydroxylgruppenhaltiger Polyester aus Diolen und $\omega$-Hydroxycarbonsäuren oder deren Lactonen mit mindestens 4 C-Atomen mit einem mittleren Molekulargewicht von 400–2000

beschichtet und härtet, gegebenenfalls unter weiterer Wärmezufuhr, wobei die Prozentsätze jeweils bezogen sind auf die Gesamtmenge der Polyole.

Die auf diese Weise applizierte Kunststoffschutzschicht ist hochelastisch und zeigt eine ausgezeichnete Haftung, so dass beim Glasbruch oder dem Bersten der Flasche die Glassplitter innerhalb der Schutzschicht verbleiben. Nach der Zerstörung der Glasflasche bleibt die Flaschenform vollständig erhalten. Die auftretende kinetische Energie wird durch Streckung und Erwärmung des Kunststoffüberzugs umgesetzt.

Von besonderem Vorteil ist die Beständigkeit der Beschichtung gegenüber heissen, alkalihaltigen Spüllaugen, in denen die Flaschen vor dem Abfüllen der Getränke gereinigt werden. Dieses betrifft in besonderem Masse für Mehrwegflaschen zu, die vor jedem Füllvorgang einer intensiven Reinigung unterzogen werden.

Der Vorteil der erfindungsgemässen Beschichtung liegt darin, dass auch nach wiederholtem Spülen in der heissen, alkalischen Waschlauge keine Verluste der mechanischen Kenndaten und keinerlei Haftungsverlust auftreten. Die mit einem derartigen Kunststoffüberzug versehenen Glasflaschen können ohne Bedenken als Behälter für kohlensäurehaltige Getränke verwendet werden, da keine Gefahr beim Zubruchgehen oder Zerplatzen für den Menschen mehr auftreten kann.

Bei ihrer Verwendung als Mehrwegflasche ist die Gebrauchsdauer einer beschichteten Flasche wesentlich länger als die der unbeschichteten Flasche, die infolge der Bewegungsabläufe durch Gegeneinanderreiben an scharfen Kanten und Spülvorgängen in heissen Lösungen oberflächenmässig stark beansprucht bzw. leicht beschädigt werden.

Zur Durchführung dieses Verfahrens wird die gereinigte Glasoberfläche, beispielsweise einer Glasflasche, zunächst mit einer wässrigen oder alkoholischen Silanschlichte behandelt. Für diese Behandlung werden Silane mit Resten verwendet, die zwei verschiedene Funktionen haben. Dieses sind zum einen niedere Alkoxyreste, insbesondere Methoxy- und Äthoxyreste, die mit den OH-Gruppen der Glasoberfläche reagieren und zum anderen organische Reste mit solchen funktionellen Gruppen, die mit den Isocyanatgruppen reagieren können, wie Amino-, Epoxid-, Mercaptogruppen usw., z.B. $\gamma$-Aminopropyltrimethoxysilan, $\gamma$-Aminopropyltriäthoxysilan, Glycidyloxypropyltriäthoxysilan, Glycidyloxypropyltrimethoxysilan, $\gamma$-Mercaptopropyltrimethoxysilan, $\gamma$-Mercaptopropyltriäthoxysilan usw. Die Behandlung der Glasoberflächen kann beispielsweise durch Tauchen oder Besprühen mit dem Schlichtemittel erfolgen. Die so behandelten Glasoberflächen können entweder separat bei 25–100°C getrocknet werden oder die Trocknung erfolgt durch das Erwärmen der Glasoberflächen auf 80 bis 100°C, d. h. auf eine Temperatur, wie sie bei der Glasherstellung im Laufe des Abkühlprozesses auftritt.

Die Applikation der nachfolgend beschriebenen lösungsmittelfreien PUR-Zweikomponentenbeschichtungsmassen auf die so vorbehandelten, vorgewärmten Glasoberflächen erfolgt nach bekannten Verfahren, wie Giessen, Spritzen, Tauchen u.ä.

Die Wärmezufuhr kann nach der Applikation der Beschichtungsmaterialien bis zur vollständigen Reaktion fortgesetzt werden, wenn die vorhandene Wärmekapazität zur Härtung selbst nicht ausreichen sollte.

Die so beschichtete Glasoberfläche wird dann der eigentlichen Härtung bei einer Temperatur im Bereich von 150–240°C, vorzugsweise 180–210°C, unterworfen.

Zur Herstellung der Beschichtung eignen sich beispielsweise aliphatische und/oder cycloaliphatische Diisocyanate, wie sie beispielsweise in dem Artikel von W. Siefken in Justus Liebigs Annalen der Chemie 562, Seiten 75–136, beschrieben sind, wie Äthylendiisocyanat-1,2, Tetramethylendiisocyanat-1,4, Hexamethylendiisocyanat-1,6, 2,2,4- bzw. 2,4,4-Trimethylhexamethylendiisocyanat-1,6 (TMDI), Dodecandiisocyanat-1,12, $\omega,\omega$,-Diisocyanatodipropyläther, Lysindiisocyanat, Cyclobutan-1,3-diisocyanat, Cyclohexan-1,3 und -1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methanolnaphthalen-2(oder 3)-5-ylidimethylendiisocyanat, Hexahydro-4,7-methano-indan-1 (oder 2) 5 (oder 6) -ylidimethylendiisocyanat, Hexahydro-4,7-methanindan-1- (oder 2) 5 (oder 6) -ylendiisocyanat, Hexahydrotoluylendiisocyanat, Perhydro-2,4'- und/oder -4,4'-diphenylmethandiisocyanat, sowie beliebige Gemische der Isomeren. Weitere geeignete Isocyanate werden in dem genannten Artikel in den Annalen auf Seite 122f beschrieben. Selbstverständlich können auch Mischungen der Isocyanate eingesetzt werden. Es eignen sich weiter die Umsetzungsprodukte dieser Diisocyanate mit Wasser im Molverhältnis von $2:\leqq1$, insbesondere das in der DE-A-2341 065 beschriebene.

Die Umsetzung des Polyolgemischs mit dem Diisocyanat erfolgt in solchen Mengen, dass auf 1 OH-Gruppe 0,8–1,2, vorzugsweise 0,95–1,1, Isocyanatgruppen kommen.

Zur Herstellung der lösungsmittelfreien PUR-Zweikomponentenbeschichtung eignen sich insbesondere Gemische trifunktioneller und bifunktioneller, hydroxylgruppenhaltiger Polyester aus $\omega$-Hydroxycarbonsäuren oder deren Lactonen, wobei unter tri- bzw. bifunktionellen Polyestern solche mit 3 oder 2 OH-Gruppen verstanden werden. Das Molekulargewicht der Polyester sollte in dem angegebenen Bereich liegen. Die Hydroxycarbonsäure oder deren Lactone haben mindestens 4 C-Atome in der Kette. Als obere Grenze können solche mit 7 C-Atomen verwendet werden. Typische Beispiele für geeignete Lactone sind: $\gamma$-Butyrolacton, $\alpha$-Valerolacton, $\varepsilon$-Caprolacton, Methyl-$\varepsilon$-caprolacton u.ä.

Die Herstellung dieser Lactonpolyesterpolyole kann in bekannter Weise nach einem in den US-A-2 890 208, 2 977 885 oder 2 933 478 beschriebenen Verfahren erfolgen, in denen man Triole oder Diole als Initiator mit den Lactonen unter Erhitzen mit oder ohne Katalysator umsetzt. Geeignete Triole sind beispielsweise Glycerin, Trimethylolpropan, Trimethyloläthan, Triäthanolamin. Beispiele für als Initiatoren geeignete Diole sind Äthylenglykol, Neopentylglykol, Propylenglykol-1,2 und -1,3, Butandiol-1,4 und -1,3, Hexandiol-1,6, Diäthylenglykol, Triäthylenglykol oder die weiter unten genannten.

Anstelle der Lactone können auch aus den entsprechenden ω-Hydroxycarbonsäuren und Triolen nach bekannten Verfahren die erfindungsgemäss einsetzbaren hydroxylgruppenhaltigen Polyester hergestellt werden.

Als niedermolekulare, aliphatische und/oder cycloaliphatische Diole, die als dritte Polyolkomponente beim Verfahren gemäss der Erfindung verwendet werden, kommen solche mit einem Molekulargewicht von etwa 60 bis etwa 250 in Frage, z. B. Äthylenglykol, 1,2-Propylenglykol, 1,3-Propylenglykol, Butandiol-1,3, Butandiol-1,4, Pentandiol-1,5, 2- bzw. 3-Methylpentandiol-1,5, Hexandiol-1,6, 1,4-Cyclohexandiol, 1,4-Dimethylolcyclohexan, 2,4,4-(2,2,4)-Trimethylhexandiol-1,6, (TMH-diol), Diäthylenglykol, Triäthylenglykol, Tetraäthylenglykol, Pentaäthylenglykol oder Gemische dieser Diole. Von diesen niedermolekularen, aliphatischen Diolen führen Hexandiol-1,6, 2,4,4-(2,2,4)-Trimethylhexandiol-1,6 und Butandiol-1,4 zu den besten Ergeb·issen.

Das mittlere Molekulargewicht der beim Verfahren gemäss der Erfindung verwendeten Polyolgemische, bestehend aus tri- und bifunktionellen, hydroxylgruppenhaltigen Polyesterpolyolen und niedrigmolekularen, aliphatischen Diolen, sollte zwischen 300 und 800 liegen, vorzugsweise zwischen 350 und 650. Die Funktionalität der eingesetzten, vorgenannten Polyolgemische sollte zwischen 2 und 3 liegen, vorzugsweise zwischen 2,4 und 2,9.

Eine besondere Ausführungsform des vorliegenden Verfahrens besteht darin, dass man zunächst das Diisocyanat mit den niedermolekularen aliphatischen Diolen zu einem Präpolymer umsetzt und dieses dann mit dem Gemisch aus tri- und bifunktionellen, hydroxylgruppenhaltigen Polyestern aus ω-Hydroxycarbonsäuren oder deren Lactonen erfindungsgemäss einsetzt. Der besondere Vorteil dieser Verfahrensvariante liegt darin, dass die Beschichtungsmassen eine höhere Viskosität dadurch erhalten. Ferner wird die Ablaufgefahr der Beschichtungsmasse von der zu beschichtenden Glasoberfläche merklich herabgesetzt.

Die Umsetzung der niedermolekularen, aliphatischen Diole, insbesondere Hexandiol-1,6, Butandiol-1,4 und 2,4,4-(2,2,4)-Trimethylhexandiol-1,6 mit den aliphatischen und/oder cycloaliphatischen Diisocyanaten kann nach beliebigen bekannten Methoden erfolgen, wie sie beispielsweise in «High Polymers» Vol. XVI Polyurethane; Chemistry and Technologie I, Chemistry von Saunders & Frisch (1962), herausgegeben von Interscience Publishers, beschrieben sind. Auf diese Weise wird ein Präpolymer in Form einer farblosen Flüssigkeit, dessen NCO-Gehalt im Bereich von etwa 15% bis etwa 30% liegt, erhalten.

Die Reaktion wird bei etwa 30 bis 100°C für eine Dauer von 3 bis 24 Stunden unter praktisch wasserfreien Bedingungen durchgeführt. Gegebenenfalls kann die Reaktion in Gegenwart eines Inertgases, wie Stickstoff, erfolgen.

Zur Verbesserung der Verlaufeigenschaften der Überzüge werden bei der Zubereitung sogenannte Verlaufmittel zugesetzt. Bei diesen Mitteln kann es sich um chemische Verbindungen bzw. deren Gemische unterschiedlicher chemischer Art handeln, z.B. polymere oder monomere Verbindungen, z.B. Acetale, Äther, Mischpolymerisate aus n-Butylacrylat und Vinylisobutyläther, Siliconharze, fluorierte Alkylester usw. Derartige Verlaufmittel können den Formulierungen in Mengen von 0,05–0,5 Gew.-%, bezogen auf den Gesamtansatz, zugesetzt werden.

Die Beschichtungsmasse kann auch gebräuchliche Zusätze, wie in den Polyolen lösliche Farbstoffe, Stabilisatoren, Entschäumer usw. enthalten. Diese können, bezogen auf Bindemittel – Polyol, Isocyanat – innerhalb eines weiten Bereichs schwanken. Die Menge richtet sich nach den Anforderungen an die Qualität der Überzüge.

Vor der Applikation der Beschichtungsmassen werden die Komponenten A und B innig gemischt und solange evakuiert, bis keine Blasen mehr aufsteigen. Falls erforderlich, muss der Mischungs- und Entgasungsvorgang je nach Viskosität bei erhöhter Temperatur durchgeführt werden.

Die Schichtdicken der ausgehärteten Überzüge können je nach Beanspruchung der Glasoberflächen oder Glasflaschen zwischen 50 und 250 $\mu$m schwanken.

Gegenstand der Erfindung sind weiter die gemäss den vorstehend beschriebenen Verfahren beschichteten Gläser, insbesondere Glasflaschen.

Die in den Beispielen genannten mechanischen Kenndaten von PUR-Flaschenbeschichtungen wurden nach folgenden Methoden bestimmt:

Zugfestigkeit  
Dehnung $\Big\}$ gemäss DIN 53 455  
$\sigma_{100}$-Spannung

Ausserdem wurden Testfolien folgenden Stabilitätsprüfungen unterworfen:

Waschlaugentest:  
4gewichtsprozentige NaOH, 0,4gewichtsprozentige Na-gluconat, 1 Zyklus: 30 Minuten/80°C  
Tropentest:  
70°C/100% rel. Luftfeuchtigkeit  
Sterilisation:  
121°C/2 h

Weiterhin wurden Haftung und Splitterschutz getestet. Der Splitterschutz wurde in einem sogenannten Falltest geprüft. Zu diesem Zweck wurden in eine beschichtete 0,7 l Getränkeflasche 6,3 g $H_2SO_4$ (98gewichtsprozentig) und 9 g $NaHCO_3$ gegeben und verschlossen. Die entstehende $CO_2$-Menge erzeugt bei 25°C einen Innendruck von ca. 500 kPa (4,0 atü). Die so vorbereitete Testflasche wurde aus einer Höhe von 1,2 m auf eine Betonplatte fallen gelassen und die Streuung der Glassplitter beobachtet.

Die erhaltenen Überzüge auf Basis von lösungsmittelfreien PUR-Zweikomponentenbeschichtungen besitzen bei hoher Festigkeit gleichzeitig auch hohe Dehnungswerte, hohe Einreissfestigkeiten und gute Tieftemperatureigenschaften.

Beschreibung der in den Beispielen verwendeten Ausgangssubstanzen

1. Komponente $A_{1-3}$ (hydroxylgruppenhaltiger Polyester):

Als mehrwertige, hydroxylgruppenhaltige Polyester wurden die Polycaprolactone der Fa. Union Carbide eingesetzt, und zwar die bifunktionellen Typen auf Basis von Diäthylenglykol und $\varepsilon$-Caprolacton.

Polyester $A_1$:

mit der Hydroxylzahl von 212 mg KOH/g einer Säurezahl von 0,3 mg KOH/g und einem mittleren Molekulargewicht von 530

Polyester $A_2$:

mit einer Hydroxylzahl von 135 mg KOH/g einer Säurezahl von 0,3 mg KOH/g und einem mittleren Molekulargewicht von 830

und die trifunktionellen Typen auf Basis von 1,1,1-Trimethylolpropan und $\varepsilon$-Caprolacton.

Polyester $A_3$:

mit einer Hydroxylzahl von 310 mg KOH/g einer Säurezahl von 0,3 mg KOH/g und einem mittleren Molekulargewicht von 540

Diese Polyester können nach in den US-A-2 890 208, 2 977 885 und 2 933 478 beschriebenen Verfahren hergestellt werden. Die mittleren Molekulargewichte dieser Polyester wurden aus der bestimmten Hydroxylzahl rechnerisch ermittelt.

Komponente $A_4$:

aliphatisches Diol, wie in den Beispielen angegeben.

2. Komponente $B_{1-2}$ (Diisocyanate):

Neben dem monomeren Isophorondiisocyanat (Härter $B_1$) wurde ein in Isophorondiisocyanat gelöstes Harnstoffaddukt, das gemäss der DE-A-2 341 065 aus IPDI und Wasser hergestellt wurde, verwendet, u. zw. das

IPDI-Addukt $B_2$:

mit einem NCO-Gehalt von 31,5 Gew.-% einem Äquivalentgewicht von 133,3 und einer Viskosität bei 25 °C von 450 cP.

Komponente $B_{3-8}$: (isocyanatgruppenhaltiges Präpolymer).

Präpolymer $B_3$:

Zu 864,21 Gewichtsteilen IPDI wurden 135,69 Gewichtsteile Hexandiol-1,6 und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 22,9%.

Präpolymer $B_4$:

Zu 854,45 Gewichtsteilen IPDI wurden 145,45 Gewichtsteile 2,4,4-(2,2,4)-Trimethylhexandiol-1,6 (1:1) und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 24,5%.

Präpolymer $B_5$:

Zu 868,52 Gewichtsteilen IPDI wurden 131,38 Gewichtsteile Butandiol-1,4 und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 20,3%.

Präpolymer $B_6$:

Zu 872,14 Gewichtsteilen IPDI wurden 127,76 Gewichtsteile Hexandiol-1,6 und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 23,7%.

Präpolymer $B_7$:

Zu 863,52 Gewichtsteilen IPDI wurden 136,38 Gewichtsteile TMH-diol und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 25,15%.

Präpolymer $B_8$:

Zu 878,24 Gewichtsteilen IPDI wurden 121,66 Gewichtsteile Butandiol-1,4 und 0,01 Gewichtsteile Di-n-butylzinndilaurat gegeben und anschliessend 4 Stunden bei 70 °C unter trockenem Stickstoff gerührt. Das erhaltene Reaktionsgemisch besitzt einen NCO-Gehalt von 21,64%.

3. Beschichtungsmassen:

In jedem der nachstehenden Beispiele wurde zunächst die Komponente A, bestehend aus dem tri- und bifunktionellen Polyester und gegebenenfalls aliphatischem und/oder cycloaliphatischem Diol, sowie Katalysator und Verlaufmittel bei 40 bis 50 °C am Dissolver homogenisiert und anschliessend so lange evakuiert, bis keine Blasen mehr aufstiegen. Danach wurde die Komponente B – der Härter oder das Präpolymer – zugesetzt, gemischt und wiederum bis zur Blasenfreiheit evakuiert. Appliziert wurde das Beschichtungsmaterial zunächst auf unbehandelte, auf 80–100 °C vorgewärmte Glasplatten, um Folien zur Ermittlung der mechanischen Kenndaten und für die Stabilitätsprüfungen, wie Waschlaugen- und Tropentest, sowie Sterilisation herzustellen. Für Haftungsversuche und Falltest wurden mit Silanschlichte (Glycidyloxypropyltrimethoxysilan) vorbehandelte, auf 80–100 °C vorgewärmte Glasplatten und -flaschen beschichtet.

Tabelle 1 zeigt Beispiele mechanischer Kenndaten von Polyolkombinationen, bestehend aus trifunktionellem Caprolactonpolyesterpolyol, linearem Caprolactonpolyesterpolyol mit einem mittleren Molekulargewicht von 830 und Hexandiol-1,6, TMH-diol bzw. Butandiol-1,4, in Verbindung mit IPDI und IPDI-Add. $B_2$ bzw. IPDI-Präpolymeren $B_{3-5}$ entsprechend vorstehender Beschreibung. Das OH/NCO-Verhältnis betrug 1:1. Die Härtung erfolgte durch 15minutiges Erhitzen auf 200 °C.

Die Reaktion zwischen Polyisocyanat einerseits und hydroxylgruppenhaltigen Polyestern und Diolen anderseits kann durch Katalysatoren in Gang gesetzt bzw. beschleunigt werden. Geeignet sind: metallorganische Verbindungen, wie Zinn- und Zinkoctoat, Di-n-butylzinndilaurat, Di-n-butylzinndiacetat und tertiäre Amine, wie 1,4-Diazobicyclooctan- [2,2,2] u. ä. und deren Gemische.

Tabelle 1

| Beispiel | 1 | 2 | 3 | 4 | 5 | 6 | 7 | 8 | 9 | 10 | 11 |
|---|---|---|---|---|---|---|---|---|---|---|---|
| **Komponente A** | | | | | | | | | | | |
| Polyester $A_3$ | 366 | 365,2 | 289,83 | 377,4 | 376,3 | 300,17 | 472,97 | 353,36 | 300,6 | 298,8 | 278,47 |
| Polyester $A_2$ | 183 | 182,6 | 231,87 | 188,7 | 188,2 | 240,14 | 126,12 | 176,68 | 240,5 | 239,1 | 222,78 |
| Hexandiol-1,6 | 61 | – | 57,97 | – | – | – | – | – | – | – | – |
| TMH-diol | – | – | – | 62,9 | – | 60,03 | 31,53 | – | – | – | – |
| Butandiol-1,4 | – | – | – | – | – | – | – | 58,89 | 60,1 | – | 55,69 |
| Di-n-butylzinndilaurat | 0,5 | 0,5 | 0,5 | 0,5 | 0,5 | 0,5 | 0,5 | 0,5 | 0,5 | 0,5 | 0,5 |
| handelsübliche Verlaufmittel auf Basis von Alkylestern perfluorierter Carbonsäuren | 1,0 | 1,0 | 1,0 | 1,0 | 1,0 | 1,0 | 1,0 | 1,0 | 1,0 | 1,0 | 1,0 |
| **Komponente B** | | | | | | | | | | | |
| IPDI $B_1$ | 388,5 | – | – | 369,5 | – | – | 367,88 | 409,57 | 397,3 | – | – |
| IPDI-Addukt $B_2$ | – | – | 418,83 | – | – | 398,16 | – | – | – | – | 441,56 |
| Präpolymer $B_3$ | – | 450,7 | – | – | – | – | – | – | – | – | – |
| Präpolymer $B_4$ | – | – | – | – | 434 | – | – | – | – | – | – |
| Präpolymer $B_5$ | – | – | – | – | – | – | – | – | – | 460,6 | – |
| **Mechanische Kenndaten** | | | | | | | | | | | |
| Zugfestigkeit $N/mm^2$ | 47,0 | 46,5 | 40,4 | 45,5 | 46,0 | 41 | 42,2 | 39,5 | 42,5 | 41,0 | 40 |
| Dehnung % | 230 | 225 | 165 | 240 | 230 | 180 | 175 | 155 | 210 | 215 | 170 |

0 001 657

Die Ergebnisse der Stabilitätsprüfungen, wie Waschlaugen- und Tropentest, sowie Sterilisation sind in Tabelle 3 zusammengefasst. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von ca. ⟩ 150% gewährleistet. Bei Dehnungswerten zwischen 130 und 150% ist der Splitterschutz jedoch erheblich verbessert. Je geringer die Dehnung der Folien (siehe auch Vergleichsbeispiel), desto geringer ist auch der Splitterschutz, d.h. die Splitter der berstenden Glasflasche sind bis in einen Umkreis von ⟩ 2 m zu finden. Die gleiche Beobachtung wurde gemacht, wenn die Dehnung zwar ⟩ 150% ist, jedoch die Zugfestigkeit in etwa ⟨ 28 N/mm² betrug.

Tabelle 2 zeigt einige weitere Beispiele mit den mechanischen Kenndaten von Polyolkombinationen, bestehend aus trifunktionellem Polyesterpolyol, linearem Polyesterpolyol mit einem mittleren Molekulargewicht von 530 und Hexandiol-1,6, TMH-diol und Butandiol-1,4 in Verbindung mit IPDI bzw. den Präpolymeren $B_{6-8}$. Das OH/NCO-Verhältnis betrug ebenfalls 1:1.

Tabelle 2

| Beispiel | 12 | 13 | 14 | 15 | 16 | 17 |
|---|---|---|---|---|---|---|
| Komponente A | | | | | | |
| Polyester $A_2$ | 365,45 | 354,30 | 366,28 | 364,08 | 289,52 | 288,20 |
| Polyester $A_1$ | 182,73 | 177,15 | 183,14 | 182,04 | 231,62 | 230,56 |
| Hexandiol-1,6 | 60,91 | – | – | – | – | – |
| TMH-diol | – | – | 61,04 | – | – | – |
| Butandiol-1,4 | – | – | – | – | 57,90 | – |
| Sn-octoat | 2,0 | 2,0 | 2,0 | 2,0 | 2,0 | 2,0 |
| handelsübliche Verlaufmittel auf Basis von Alkylestern perfluorierter Carbonsäuren | 1,0 | 1,0 | 1,0 | 1,0 | 1,0 | 1,0 |
| Komponente B | | | | | | |
| IPDI – $B_1$ | 387,91 | – | 386,54 | – | 417,96 | – |
| Präpolymer $B_6$ | – | 465,55 | – | – | – | – |
| Präpolymer $B_7$ | – | – | – | 450,83 | – | – |
| Präpolymer $B_8$ | – | – | – | – | – | 478,24 |
| Mechanische Kenndaten | | | | | | |
| Zugfestigkeit N/mm² | 49,5 | 48 | 46,4 | 46,7 | 44,7 | 43,8 |
| Dehnung % | 200 | 190 | 205 | 210 | 185 | 175 |

In den Tabellen 1 und 2 bedeuten die Zahlenangaben für die Komponenten A und B entweder Gramm Produkt oder Gewichtsteile Produkt.

Vergleichsbeispiel 1

Komponente A
384,87 Gewichtsteile Polyätherpolyol (OH-Z.: 108 mg KOH/g) linear
192,68 Gewichtsteile Polyätherpolyol (OH-Z.: 258 mg KOH/g) linear
102,0 Gewichtsteile Trimethylolpropan
2,0 Gewichtsteile Sn-octoat
1,0 Gewichtsteile handelsübliche Verlaufmittel auf Basis von Alkylestern perfluorierter Carbonsäuren

Komponente B
407,45 Gewichtsteile IPDI

Mechanische Eigenschaften
Zugfestigkeit 18,0 N/mm²
Dehnung 10%
Kein Splitterschutz gewährleistet.

Vergleichsbeispiel 2
Komponente A
225,12 Gewichtsteile Polytetramethylenätherglykol (OH-Z.: 172,5 mg KOH/g)
262,43 Gewichtsteile Polytetramethylenätherglykol (OH-Z.: 110,5 mg KOH/g)
102,0 Gewichtsteile Trimethylolpropan
2,0 Gewichtsteile Sn-octoat
1,0 Gewichtsteile Verlaufmittel analog Vergleichsbeispiel 1

Komponente B
407,45 Gewichtsteile IPDI

Mechanische Eigenschaften
Zugfestigkeit 35,0 N/mm²
Dehnung 160%
Im Falltest wurden geringfügig streuende Glassplitter beobachtet. Ausserdem zeigten die Folien nach dem Härtungsprozess eine deutliche Gelbfärbung und bereits nach 400 h Kurzbewitterung im Xenotest trat Versprödung auf und nach 650 h Zerstörung der Folie.

Tabelle 3

| Beispiel | | | | 2 | 6 | 9 | 12 | 14 | 15 | 17 | 19 |
|---|---|---|---|---|---|---|---|---|---|---|---|
| **Waschlaugentest** | | | | | | | | | | | |
| vor dem | Zugfestigkeit $\sigma_B$ | | N/mm² | 46,5 | 44 | 41,5 | 40,5 | 39,4 | 48,7 | 46,1 | 44,1 |
| Test | Dehnung $\varepsilon_B$ | | % | 220 | 230 | 180 | 215 | 175 | 205 | 200 | 175 |
| | $\sigma_{100}$-Spannung $\sigma_{100}$ | | N/mm² | 14,0 | 13,5 | 12,5 | 13 | 11,5 | 14,4 | 13,9 | 15,3 |
| nach dem | $\sigma_B$ | n. 5. Zyklus | N/mm² | 26,0 | 23,5 | 22,0 | 23,0 | 20,3 | 27,3 | 25,8 | 23,2 |
| Test | | u. n. 24 h bei RT* | | 45,0 | 42,5 | 41,0 | 43,0 | 39,0 | 46,1 | 44,5 | 43,7 |
| | $\varepsilon_B$ | n. 5. Zyklus | % | 225 | 230 | 195 | 230 | 180 | 200 | 210 | 180 |
| | | u. n. 24 h bei RT* | | 195 | 195 | 200 | 205 | 160 | 185 | 190 | 165 |
| | $\sigma_{100}$ | n. 5. Zyklus | N/mm² | 5,2 | 5,4 | 5,3 | 4,4 | 4,0 | 5,9 | 5,3 | 5,7 |
| | | u. n. 24 h bei RT* | | 17,0 | 16,8 | 15,2 | 14,1 | 12,1 | 16,9 | 16,4 | 15,2 |
| **Tropentest** | | | | | | | | | | | |
| vor dem | Zugfestigkeit $\sigma_B$ | | N/mm² | 45,0 | 43,5 | 42,0 | 41,4 | 40,1 | 48,4 | 44,9 | 42,9 |
| Test | Dehnung $\varepsilon_B$ | | % | 210 | 215 | 190 | 205 | 170 | 210 | 195 | 180 |
| | $\sigma_{100}$-Spannung $\sigma_{100}$ | | N/mm² | 15,0 | 14,0 | 13,5 | 14,3 | 11,7 | 15,1 | 14,1 | 14,9 |
| nach dem | $\sigma_B$ | n. 1 d + 24 h bei RT* | N/mm² | 45,0 | 44,0 | 40,0 | 40,5 | 39,1 | 47,8 | 45,1 | 42,7 |
| Test | $\varepsilon_B$ | n. 1 d + 24 h bei RT* | % | 220 | 225 | 190 | 200 | 160 | 200 | 185 | 190 |
| | $\sigma_{100}$ | n. 1 d + 24 h bei RT* | N/mm² | 10,5 | 10,0 | 9,2 | 11,6 | 10,1 | 10,8 | 12,4 | 12,1 |
| | $\sigma_B$ | n. 7 d + 24 h bei RT* | N/mm² | 41,5 | 39,5 | 38,1 | 39,0 | 38,3 | 42,1 | 43,0 | 40,1 |
| | $\varepsilon_B$ | n. 7 d + 24 h bei RT* | % | 205 | 210 | 175 | 185 | 150 | 190 | 175 | 180 |
| | $\sigma_{100}$ | n. 7 d + 24 h bei RT* | N/mm² | 11,0 | 10,5 | 9,8 | 10,0 | 8,7 | 11,5 | 12,6 | 12,7 |
| | $\sigma_B$ | n. 14 d + 24 h bei RT* | N/mm² | 38,5 | 38,0 | 37,5 | 38,0 | 35,7 | 38,7 | 38,9 | 38,5 |
| | $\varepsilon_B$ | n. 14 d + 24 h bei RT* | % | 190 | 195 | 165 | 170 | 150 | 185 | 170 | 160 |
| | $\sigma_{100}$ | n. 14 d + 24 h bei RT* | N/mm² | 16,0 | 15,0 | 14,4 | 15,3 | 10,8 | 16,5 | 15,1 | 14,8 |
| Gewichtszunahme | | | % | 2,1 | 2,0 | 2,1 | 2,2 | 2,0 | 2,1 | 2,2 | 2,1 |

* RT = Raumtemperatur

## Patentansprüche

1. Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 μm durch Auftragen von Massen aus Polyisocyanaten und hydroxylgruppenhaltigen Verbindungen sowie üblicher Verarbeitungszusätze und Aushärten des Überzugs bei erhöhten Temperaturen, dadurch gekennzeichnet, dass man zunächst die reine Glasoberfläche mit einer wässrigen oder alkoholischen Silanschlichte behandelt, trocknet und anschliessend die so behandelte Glasoberfläche mit einer Masse aus

a) aliphatischen und/oder cycloaliphatischen Diisocyanaten oder deren Umsetzungsprodukte mit Wasser im Molverhältnis von 2 : ≦1 (Komponente B) und einem Gemisch hydroxylgruppenhaltiger Verbindungen bestehend aus

40–80 Gew.-%, vorzugsweise 50–75 Gew.-%, trifunktioneller, hydroxylgruppenhaltiger Polyester aus Triolen und ω-Hydroxycarbonsäuren oder deren Lactonen mit mindestens 4 C-Atomen mit einem mittleren Molekulargewicht von 300 bis 1400,

15–50 Gew.-%, vorzugsweise 20–40 Gew.-%, bifunktioneller, hydroxylgruppenhaltiger Polyester aus Diolen und ω-Hydroxycarbonsäuren oder deren Lactonen mit mindestens 4 C-Atomen mit einem mittleren Molekulargewicht von 400 bis 2000 und

2,5–20 Gew.-%, vorzugsweise 5–15 Gew.-%, aliphatischer und/oder cycloaliphatischer Diole (Komponente A)

oder aus

b) ein Präpolymer aus aliphatischen und/oder cycloaliphatischen Diisocyanaten und 2,5–20 Gew.-%, vorzugsweise 5–15 Gew.-%, niedermolekularen aliphatischen Diolen (Komponente B) und einem Gemisch hydroxylgruppenhaltiger Polyester bestehend aus

40–80 Gew.-%, vorzugsweise 50–75 Gew.-%, trifunktioneller, hydroxylgruppenhaltiger Polyester aus Triolen und ω-Hydroxycarbonsäuren oder deren Lactonen mit mindestens 4 C-Atomen mit einem mittleren Molekulargewicht von 300 bis 1400 und

15–50 Gew.-%, vorzugsweise 20–40 Gew.-%, bifunktioneller, hydroxylgruppenhaltiger Polyester aus Diolen und ω-Hydroxycarbonsäuren oder deren Lactonen mit mindestens 4 C-Atomen mit einem mittleren Molekulargewicht von 400 bis 2000 (Komponente A)

beschichtet und härtet, gegebenenfalls unter weiterer Wärmezufuhr, wobei die Prozentsätze jeweils bezogen sind auf die Gesamtmenge der Polyole:

2. Verfahren nach Anspruch 1, dadurch gekennzeichnet, dass der trifunktionelle, hydroxylgruppenhaltige Polyester ein mittleres Molekulargewicht von 500 bis 800 hat.

3. Verfahren nach den Ansprüchen 1 oder 2, dadurch gekennzeichnet, dass der bifunktionelle, hydroxylgruppenhaltige Polyester ein mittleres Molekulargewicht von 500 bis 1200 hat.

4. Verfahren nach den Ansprüchen 1–3, dadurch gekennzeichnet, dass man Polyesterdiole und Diole sowie Polyisocyanate in solchen Mengen einsetzt, dass auf eine OH-Gruppe 0,8–1,2 Isocyanatgruppen kommen.

5. Verfahren nach Anspruch 4, dadurch gekennzeichnet, dass auf eine OH-Gruppe 0,95–1,1 Isocyanatgruppen kommen.

6. Verfahren nach den Ansprüchen 1–5, dadurch gekennzeichnet, dass man die beschichteten Glasoberflächen bei einer Temperatur im Bereich von 150–240 °C der Härtung unterwirft.

7. Verfahren nach Anspruch 6, dadurch gekennzeichnet, dass man die Härtung bei Temperaturen im Bereich von 180–210 °C durchführt.

## Claims

1. A method for the coating of glass surfaces, especially glass bottles, in order to prevent the scattering of glass particles upon bursting, with a transparent, duroplastic protective coat of more than 50 μm by depositing substances of polyisocyanates and hydroxy-group-containing compounds as well as usual processing additives, and hardening the overlay at increased temperatures, wherein the clean glass surface is first treated with an aqueous or alcoholic silane skim coat, cried, and subsequently the so treated glass surface is coated with a mass of
of

a) aliphatic and/or cycloaliphatic diisocyanates or their reaction products with water in a mole ratio of 2 : ≦1 (component B) and a mixture of hydroxy-group-containing compounds consisting of

40–80 weight-%, preferably 50–75 weight-%, trifunctional, hydroxy-group-containing polyesters of triols and ω-hydroxy-carboxylic acids or their lactones with at least 4 C-atoms with an average molecular weight of 300 to 1400,

15–50 weight-%, preferably 20–40 weight-%, bifunctional, hydroxy-group-containing polyesters of diols and ω-hydroxy-carboxylic acids or their lactones with at least 4 C-atoms with an average molecular weight of 400 to 2000,

2,5–20 weight-%, preferably 5–15 weight-%, aliphatic and/or cycloaliphatic diols (component A) or of

b) a prepolymer of aliphatic and/or cycloaliphatic diisocyanates and 2,5–20 weight-% preferably 5–15 weight-%, lower molecular aliphatic diols (component B) and a mixture of hydroxy-group-containing polyesters consisting of

40–80 weight-%, preferably 50–75 weight-%, trifunctional, hydroxy-group-containing polyesters of triols and ω-hydroxy carboxylic acids or their lactones with at least 4 C-atoms with an average molecular weight of 300 to 1400 and

15–50 weight-%, preferably 20–40 weight-%, bifunctional, hydroxy-group-containing polyesters of diols and $\omega$-hydroxy carboxylic acids or their lactones with at least 4 C-atoms with an average molecular weight of 400 to 2000 (component A),

and hardening said substances, if necessary, with additional heat, whereby the percentages being related to the total amount of polyols.

2. A method according to Claim 1, wherein the trifunctional, hydroxy-group-containing polyester has an average molecular weight of 500–800.

3. A method according to Claims 1 or 2, wherein the bifunctional, hydroxy-group-containing polyester has an average molecular weight of 500–1200.

4. A method according to Claims 1–3, wherein polyester diols and diols as well as polyisocyanates are reacted in amounts such that 0,8–1,2-isocyanate groups react with one OH-group.

5. A method according to Claim 4, wherein 0,95–1,1 isocyanate groups react with one OH-group.

6. A method according to Claims 1–5, wherein said coated glass surfaces are subjected to hardening at a temperature in the range of 150–240 °C.

7. A method according to Claim 6, wherein the hardening is carried out at temperatures in the range of 180–210 °C.

**Revendications**

1. Procédé d'enduction de surfaces de verre, en particulier de bouteilles de verre, pour empêcher l'éparpillement des particules de verre lors de l'éclatement, avec une couche protectrice transparente duroplastique de plus de 50 $\mu$m, par application de masses de polyisocyanates et de composés contenant des groupes hydroxyle de même que d'additifs de travail usuels et durcissement complet de l'enduit à des températures élevées, caractérisé en ce qu'on traite tout d'abord la surface de verre propre avec une colle aqueuse ou alcoolique de silane, on la sèche et ensuite on enduit la surface de verre ainsi traitée avec une masse composée

a) de diisocyanates aliphatiques et/ou cycloaliphatiques ou de leurs produits de réaction avec l'eau dans le rapport molaire de 2 : ≦1 (composant B) et d'un mélange de composés contenant des groupes hydroxyle à

40–80% en poids, de préférence 50–75% en poids de polyesters trifonctionnels contenant des groupes hydroxyle dérivant de triols et d'acides $\omega$-hydroxycarboxyliques ou de leurs lactones ayant au moins 4 atomes de carbone et un poids moléculaire moyen de 300 à 1400,

15–50% en poids, de préférence 20–40% en poids de polyesters bifonctionnels contenant des groupes hydroxyle dérivant de diols et d'acides $\omega$-hydroxycarboxyliques ou de leurs lactones ayant au moins 4 atomes de carbone et un poids moléculaire moyen de 400 à 2000,

2,5–20% en poids, de préférence 5–15% en poids de diols aliphatiques et/ou cycloaliphatiques (composant A), ou de

b) un prépolymère de diisocyanates aliphatiques et/ou cycloaliphatiques et de 2,5–20% en poids, de préférence 5–15% en poids, de diols aliphatiques à poids moléculaire inférieur (composant B) et d'un mélange de polyesters contenant des groupes hydroxyle consistant en

40–80% en poids, de préférence 50–75% en poids de polyesters trifonctionnels contenant des groupes hydroxyle dérivant de triols et d'acides $\omega$-hydroxycarboxyliques ou de leurs lactones ayant au moins 4 atomes de carbone et un poids moléculaire de 300 à 1400 et

15–50% en poids, de préférence 20–40% en poids de polyesters bifonctionnels contenant des groupes hydroxyle dérivant de diols et d'acides $\omega$-hydroxycarboxyliques ou de leurs lactones ayant au moins 4 atomes de carbone et un poids moléculaire moyen de 400 à 2000 (composant A),

et on durcit, éventuellement avec un apport supplémentaire de chaleur, les indications de pourcentage se rapportant chaque fois à la quantité totale des polyols.

2. Procédé selon la revendication 1, caractérisé en ce que le polyester trifonctionnel contenant des groupes hydroxyle a un poids moléculaire moyen de 500 à 800.

3. Procédé selon la revendication 1 ou 2, caractérisé en ce que le polyester bifonctionnel contenant des groupes hydroxyle a un poids moléculaire moyen de 500 à 1200.

4. Procédé selon les revendications 1 à 3, caractérisé en ce qu'on utilise les polyesterdiols et les diols de même que les polyisocyanates en des quantités telles que pour un groupe OH il y ait 0,8–1,2 groupe isocyanate.

5. Procédé selon la revendication 4, caractérisé en ce que pour un groupe OH il y a 0,95–1,1 groupe isocyanate.

6. Procédé selon les revendications 1 à 5, caractérisé en ce qu'on soumet au durcissement les surfaces de verre enduites à une température dans l'intervalle de 150 à 240 °C.

7. Procédé selon la revendication 6, caractérisé en ce qu'on exécute le durcissement à des températures dans l'intervalle de 180–210 °C.